(19) Europäisches Patentamt
European Patent Office
Office européen des brevets

(11) **EP 3 451 293 A1**

(12) **EUROPEAN PATENT APPLICATION**

(43) Date of publication:
**06.03.2019 Bulletin 2019/10**

(51) Int Cl.:
***G06T 9/00*** *(2006.01)* ***H04N 19/82*** *(2014.01)*

(21) Application number: **17306102.9**

(22) Date of filing: **28.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing 92130 Issy-les-Moulineaux (FR)**

(72) Inventors:
• **GALPIN, Franck**
  35576 Cesson-Sévigné (FR)
• **RACAPE, Fabien**
  35576 Cesson-Sévigné (FR)
• **DE MARMIESSE, Gabriel**
  35576 Cesson-Sévigné (FR)

(74) Representative: **Huchet, Anne et al InterDigital CE Patent Holdings 20, rue Rouget de Lisle 92130 Issy-les-Moulineaux (FR)**

(54) **METHOD AND APPARATUS FOR FILTERING WITH MULTI-BRANCH DEEP LEARNING**

(57)    Deep learning may be used in video compression for in-loop filtering in order to reduce artifacts. To reduce the computation complexity of the neural networks, in one embodiment, a multi-branch CNN is used. The multi-branch CNN may include multiple basic CNNs and an identify filter, where each basic CNN or the identity filter is considered as a branch. At the encoder side, the best branch can be chosen, for example, based on RDO. The best branch can be indicated to or be derived at the decoder side. For similar filtering performance, each basic CNN in the multi-branch CNN can use fewer layers than if the filter is done by a single-branch CNN. At the decoder side, the best branch is used for in-loop filtering. By breaking the symmetry at the encoding and decoding using the CNN, the computation complexity at the decoder side can be reduced.

**FIG. 7C**

**Description**

TECHNICAL FIELD

The present embodiments generally relate to a method and an apparatus for video encoding and decoding, and more particularly, to a method and an apparatus for filtering with a multi-branch neural network in video encoding and decoding.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. To reconstruct the video, the compressed data is decoded by inverse processes corresponding to the prediction, transform, quantization and entropy coding. To reduce artifacts, in-loop filtering can be used.

SUMMARY

According to a general aspect, a method for video encoding is presented, comprising: determining a first reconstructed version of an image block; and processing said first reconstructed version of said image block, in accordance with a branch from a plurality of branches, to form a second reconstructed version of said image block, wherein one or more of said plurality of branches are based on respective neural networks.

According to another general aspect, a method for video decoding is presented, comprising: determining a first reconstructed version of an image block; accessing information indicating that a branch, from a plurality of branches, is to be used for processing said first reconstructed version of said image block, wherein one or more of said plurality of branches are based on respective neural networks; and processing, in accordance with said indicated branch, said first reconstructed version of said image block to form a second reconstructed version of said image block.

According to another general aspect, an apparatus for video encoding, comprising at least a memory and one or more processors, said one or more processors configured to: determine a first reconstructed version of an image block; and process said first reconstructed version of said image block, in accordance with a branch from a plurality of branches, to form a second reconstructed version of said image block, wherein one or more of said plurality of branches are based on respective neural networks.

According to another general aspect, an apparatus for video decoding is presented, comprising at least a memory and one or more processors, said one or more processors configured to: determine a first reconstructed version of an image block; access information indicating that a branch, from a plurality of branches, is to be used for processing said first reconstructed version of said image block, wherein one or more of said plurality of branches are based on respective neural networks; and process, in accordance with said indicated branch, said first reconstructed version of said image block to form a second reconstructed version of said image block.

Said neural networks may have the same structure. Said neural networks may also share one or more layers, at the beginning or at the end of said neural networks. Each of said neural networks is capable of independently filtering said first reconstructed version of said image block.

Said first reconstructed version of said image block may correspond to a prediction block of said image block, or to a sum of said prediction block of said image block and prediction residuals for said image block. Said second reconstructed version of said image block may be used to predict another image block, for intra or inter prediction.

During the encoding process, the encoder may explicitly signal (i.e., provide information) to the decoder which branch is selected. Alternatively, the decoder may derive which branch is selected, for example, using causal neighbor samples. Said selected branch may be used as the only in-loop filter, that is, all other in-loop filters are removed. Said selected branch may also be used together with other in-loop filters, or even as a post-processing filter.

In one exemplary embodiment, said neural networks are convolutional neural networks, which may be based on residue learning.

In one exemplary embodiment, said plurality of branches may include an identify branch.

When encoding or decoding, said image block may corresponds to a Coding Unit (CU), Coding Block (CB), a Coding Tree Unit (CTU).

To obtain parameters for said neural networks, a training process for said neural networks may be based on a loss function, which is based on a weighted sum of the differences between training samples and outputs from said respective neural networks. The training process may perform gradient descent until one branch has a smaller error than other non-identity branches; and then scale gradients of said other non-identity branches by a weighting factor smaller than 1.

According to another general aspect, a video signal is formatted to include prediction residuals between an image block and a predicted block of said image block, wherein a branch, from a plurality of branches, is used for processing a reconstructed version of said image block, wherein one or more of said plurality of branches are based on neural networks, and wherein said reconstructed version of an image block is based on said predicted block and said prediction residuals.

The present embodiments also provide a computer readable storage medium having stored thereon instructions for encoding or decoding video data according to the methods described above. The present embodiments also provide a computer readable storage medium having stored thereon a bitstream generated according to the methods described above. The present embodiments also provide a method and an apparatus for transmitting the bitstream generated according to the methods described above.

## BRIEF DESCRIPTION OF THE DRAWINGS

FIG. 1 illustrates a block diagram of an exemplary HEVC (High Efficiency Video Coding) video encoder.

FIG. 2 illustrates a block diagram of an exemplary HEVC video decoder.

FIG. 3 illustrates four in-loop filters used in JEM 6.0.

FIG. 4 illustrates an exemplary CNN (Convolutional Neural Network).

FIG. 5 illustrates a Variable-filter-size Residue-learning CNN (VRCNN) designed as a post-processing filter for HEVC.

FIGs. 6A, 6B and 6C illustrate the training process, the encoding process and the decoding process, respectively, using a CNN as an in-loop filter.

FIGs. 7A, 7B and 7C illustrate the training process, the encoding process and the decoding process, respectively, using a multi-branch CNN as an in-loop filter, according to an embodiment.

FIG. 8 illustrates a training process using another multi-branch CNN, according to an embodiment.

FIG. 9 illustrates a block diagram of an exemplary system in which various aspects of the exemplary embodiments may be implemented.

## DETAILED DESCRIPTION

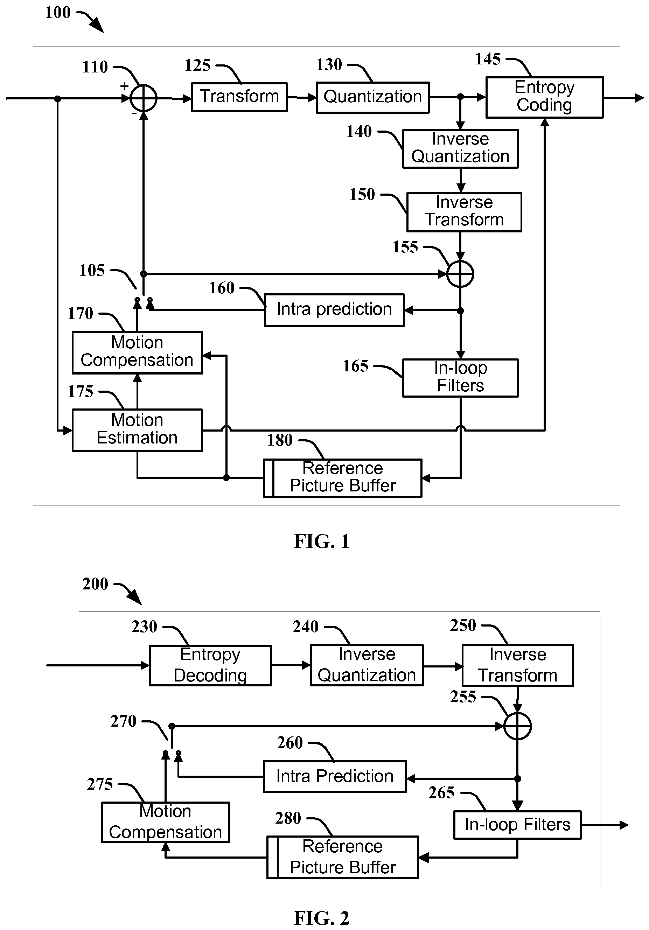

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably, the terms "image," "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

In order to exploit the spatial redundancy, CUs in intra mode are predicted from reconstructed neighboring samples within the same slice. The causal neighboring CUs have already been encoded/decoded when the encoding/decoding of the current CU is considered. To avoid mismatch, the encoder and the decoder have the same prediction. Therefore, both the encoder and the decoder use the information from the reconstructed/decoded neighboring causal CUs to form prediction for the current CU.

A set of 35 intra prediction modes is available in HEVC, including a planar (indexed 0), a DC (indexed 1) and 33 angular prediction modes (indexed 2-34). The intra prediction reference is reconstructed from the row and column adjacent to the current block. The reference may extend over two times the block size in horizontal and vertical direction using available samples from previously reconstructed blocks. When an angular prediction mode is used for intra prediction, reference samples can be copied along the direction indicated by the angular prediction mode.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

FIG. 2 illustrates a block diagram of an exemplary HEVC video decoder 200. In the exemplary decoder 200, a bitstream is decoded by the decoder elements as described below. Video decoder 200 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (230) to obtain transform coefficients, motion vectors, and other coded information. The transform coefficients are de-quantized (240) and inverse transformed (250) to decode the prediction residuals. Combining (255) the decoded prediction residuals and the predicted block, an image block is reconstructed. The predicted block may be obtained (270) from intra prediction (260) or motion-compensated prediction (i.e., inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

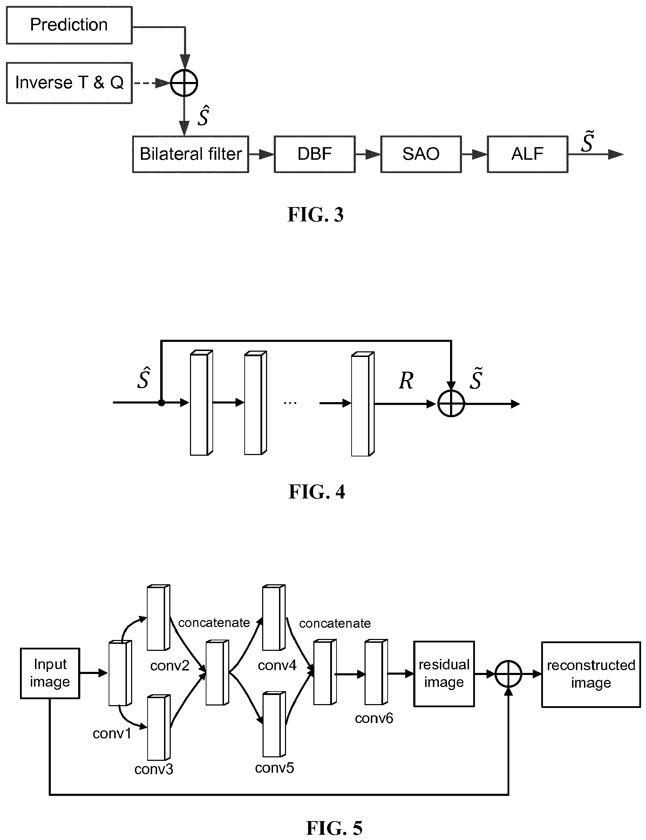

As described above for HEVC, deblocking and SAO filters are used as in-loop filters to reduce encoding artifacts. More generally for video compression, other filters can be used for in-loop filtering. For example, as shown in FIG. 3 for the current JEM 6.0 (Joint Exploration Model 6.0) developed by JVET (Joint Video Exploration Team), four filters, namely, bilateral filter (BLF), the deblocking filter (DBF), SAO and ALF (Adaptive Loop Filter) are successively applied. These different filters are in general based on: (1) samples analysis and pixels classification and (2) class-dependent filtering.

For ease of notation, we refer to the input image to the encoder as S, input to in-loop filtering as S, and output of in-loop filtering as S. S may also be referred to as an initial reconstruction or an initial reconstructed version of the image. As shown in FIG. 3, the input to in-loop filtering is the sum of predicted samples and the decoded prediction residuals. For certain blocks, when prediction residuals are zero or do not exist (e.g., in SKIP mode), the input to in-loop filtering is the predicted samples directly.

In the current JEM, a bilateral filter is applied before the deblocking filter, to the reconstructed samples $\hat{S}$. BLF works by basing the filter weights not only on the distance to neighboring samples but also on their values. Each sample in the initial reconstructed picture is replaced by a weighted average of itself and its neighbors. The weights are calculated based on the distance from the center sample as well as the difference in sample values. Because the filter is in the shape of a small plus sign (i.e., the filter uses four neighbor samples), all of the distances are 0 or 1.

A sample located at (i, j), will be filtered using its neighboring samples. The weight $\omega(i, j, k, l)$ is the weight assigned to a neighboring sample (k, l) for filtering the current sample (i, j), and is defined as:

$$\omega(i, j, k, l) = e^{\left( -\frac{(i-k)^2 + (j-l)^2}{2\sigma_d^2} - \frac{\|I(i,j) - I(k,l)\|^2}{2\sigma_r^2} \right)}$$

where I(i, j) and I(k, l) are the intensity values of samples (i, j) and (k, l), respectively, in the initial reconstruction $\hat{S}$, $\sigma_d$ is the spatial parameter, and $\sigma_r$ is the range parameter. The properties (or strength) of the bilateral filter is controlled by parameters $\sigma_d$ and $\sigma_r$. In JEM 6.0, $\sigma_d$ is set dependent on the transform unit size and prediction mode, and $\sigma_r$ is set based on the QP used for the current block.

The output filtered sample value $I_F(i, j)$ is calculated as:

$$I_F(i, j) = \frac{\sum_{k,l} I(k, l) * \omega(i, j, k, l)}{\sum_{k,l} \omega(i, j, k, l)}$$

The proposed bilateral filter is applied to each CU, or blocks of maximum size 16x16 if the CU is larger than 16x16, in both the encoder and the decoder. In JEM 6.0, the bilateral filter is performed inside the RDO (Rate-Distortion Optimization) loop at the encoder side. Thus, the filtered blocks may also be used for predicting the subsequent blocks (intra prediction).

ALF is basically designed based on Wiener filter, which aims at designing linear filters (1D or 2D) to minimize the L2-distortion, that is, minimizing the square error between the filtered samples and the reference ones (in general the original samples). In the JEM, ALF with block based filter adaption is applied. For the luma component, one among 25 filters is selected for each 2x2 block based on the direction and activity of signal.

Up to three circular symmetric filter shapes are supported for the luma component. An index is signalled at the picture level to indicate the filter shape used for the luma component of a picture. For chroma components in a picture, the 5x5 diamond shape filter is always used.

The block classification is applied to each 2x2 block, which is categorized into one out of 25 classes based on the local signal analysis (gradients, directionality). For both chroma components in a picture, no classification method is applied, i.e., a single set of ALF coefficients is applied to each chroma component.

The filtering process of luma component can be controlled at the CU level. A flag is signalled to indicate whether ALF is applied to the luma component of a CU. For chroma component, whether ALF is applied or not is indicated at the picture level only. ALF filter parameters are signalled in the first CTU, before the SAO parameters of the first CTU. Up to 25 sets of luma filter coefficients could be signalled. To reduce bits overhead, filter coefficients of different classification can be merged. Also, the ALF coefficients of reference pictures can be reused as ALF coefficients of a current picture.

There are also some works in using deep learning to perform in-loop filtering. The field of deep learning concerns the use of deep neural networks. A neural network contains neurons that are organized by groups called layers. There are the input layer, output layer and hidden layer(s) in a neural network. A deep neural network has two or more hidden layers.

Video compression may be considered as linked to pattern recognition, as compression often looks for repetitive patterns in order to remove redundancies. Because artifact removal or artifact reduction in video compression can be considered as recognizing and restoring the original images, it is possible to use neural networks as filters to reduce artifacts. In this application, artifact reduction is also referred to as image restoration, and the neural networks for reducing artifacts may also be referred to as the restoration filters.

FIG. 4 shows an exemplary M-layer convolutional neural network, where the initial reconstruction from the video codec without filtering ($\hat{S}$) is restored as $\tilde{S}$ by adding a residue $R$ computed by the CNN. Mathematically, the network can be represented as:

$$F_1(\widehat{S}) = g(W_1 * \widehat{S} + B_1),$$

$$F_i(\widehat{S}) = g(W_i * F_{i-1}(\widehat{S}) + B_i), i = \{2, ..., M - 1\}$$

$$F_M(\widehat{S}) = g(W_M * F_{M-1}(\widehat{S}) + B_M) + \widehat{S},$$

$$\tilde{S} = F_M(\widehat{S})$$

where $W_i$ and $B_i$ are the weights and bias parameters for layer $i$, respectively, $g()$ is the activation function (e.g., a sigmoid or a Rectified Linear Unit (ReLU) function), and * denotes the convolution operation. The output $\tilde{S}$ from the CNN might be stored in the Reference Picture Buffer (RPB) to be used as predictor for encoding or decoding subsequent frames.

The parameter set $\theta$, including $W_i$ and $B_i$, $i = \{1, ... , M\}$, can be trained from $K$ training samples $\{S_k\}$, $k = \{1, ... , K\}$, for example, by minimizing a loss function defined based on the error between restored images and original images, as:

$$L(\theta) = \frac{1}{K} \sum_{k=1}^{K} \left\| F(\widehat{S}_k) - S_k \right\|^2$$

Note that the loss function may also contain other terms in order to stabilize the convergence or avoid over-fitting. These regularization terms can be simply added to the error function.

To reduce compression artifacts, in an article by Yuanying Dai et al., entitled "A convolutional neural network approach for post-processing in HEVC intra coding," in International Conference on Multimedia Modeling, pp. 28-39, Springer, 2017, a CNN-based post-processing algorithm for HEVC, a Variable-filter-size Residue-learning CNN (VRCNN), is designed to improve the performance and to accelerate network training.

In particular, as shown in FIG. 5, the VRCNN is structured as a four-layer fully convolutional neural network, where the four layers may be considered to correspond to feature extraction, feature enhancement, mapping, and reconstruction, respectively. To adapt to variable size transform in HEVC, the second layer uses a combination of 5x5 and 3x3 filters (conv2, conv3), and the third layer uses a combination of 3x3 and 1x1 filters (conv4, conv5). In addition, because the input before filtering and the output after filtering in artifact reduction are usually similar, learning the difference between them can be easier and more robust. Thus, VRCNN uses residue learning techniques, where the CNN is designed to learn the residue between the output and input rather than directly learning the output.

It should be noted that about 50,000 parameters are needed in the VRCNN, which results in a huge number of operations (i.e., about 50,000 multiplications/additions) per pixel at the decoder. That is, VRCNN implies a high complexity in terms of hardware and power consumption.

To reduce the CNN computational complexity and/or memory footprint, different methods can be used. For example, the total number of parameters can be reduced, which however may reduce the performance of the network. In another example, the number of non-zero parameters can be reduced, e.g., through network quantization/compression, or the number of different weights can be reduced.

The present embodiments are directed to a multi-branch CNN for image filtering. In one embodiment, multiple CNNs are used at the encoder side, and only one branch is used at the decoder side. By breaking the symmetry between training/encoding and decoding, the complexity at the decoder side may be reduced. The present embodiments can be implemented together with other methods, for example those described above, to further reduce the complexity.

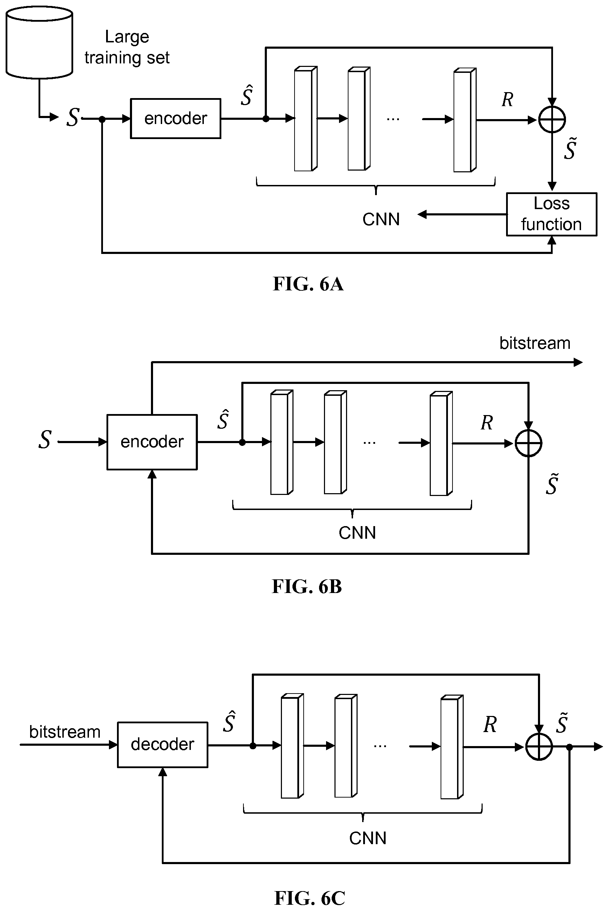

FIG. 6A shows that a CNN is trained on a large database of images, where the network tries to restore a reconstructed image by an encoder, by minimizing the error with the original image. FIG. 6B shows that the resulting CNN is used in the encoder to restore images after reconstruction. The restored images can then be displayed or used as reference to predict other frames in the sequence. Symmetrically, the decoder as shown in FIG. 6C receives the bitstream, reconstructs the images and restores the images using the same CNN.

In one embodiment, to reduce the complexity, we propose to break the symmetry between training/encoding and decoding. During the training, multiple basic CNNs are learned. For ease of notation, each basic CNN is also denoted as a branch, and the overall set of multiple CNNs is denoted as a multi-branch CNN. At the encoder side, the encoder chooses a branch to use and which branch to be executed can be signaled to the decoder. At the decoder side, only the chosen branch will be executed, therefore reducing complexity.

More generally, a subset of branches may be executed. Accordingly, the learning stage may also be adjusted, for example, the training process may first learn one type of noise to obtain several branches, then learn another type of noise to obtain several other branches. Alternatively, B (B>1) best branches from the basic CNNs may be selected.

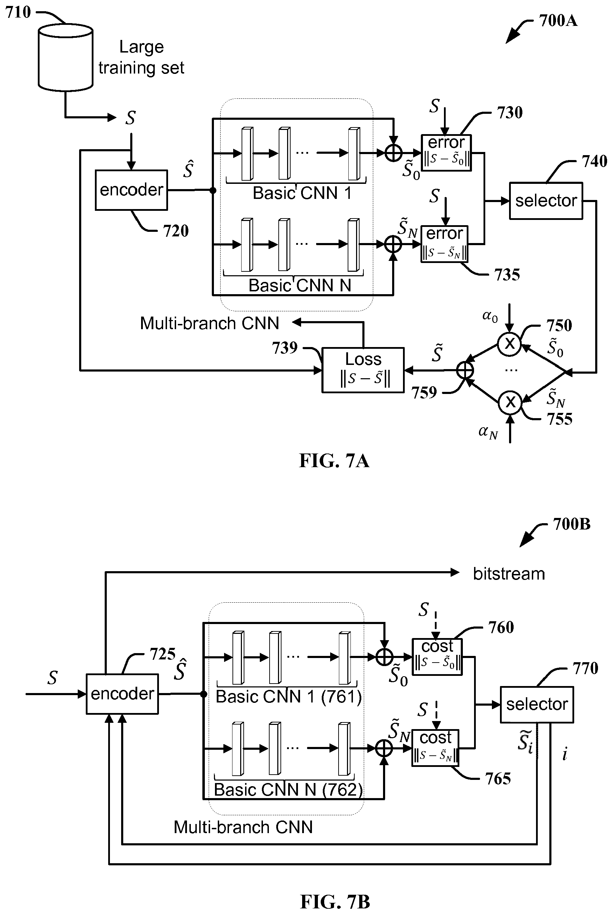

FIG. 7A shows an exemplary training process 700A for an exemplary multi-branch CNN, according to an embodiment. Similar to what is shown in FIG. 6A, a large database of images (710) is used as the training input, and the output from the encoder without filtering (720), $\hat{S}$, is used as input to different branches. Here, a CNN as shown in FIG. 6A is used as a basic CNN, namely as a branch of the multi-branch CNN.

Instead of having one branch of M weights to learn the restoration filter, we now use N (N > 1) branches of M' weights for similar performance. Usually M' is smaller than M, but larger than M/N. On the other hand, if M layers are used for each branch, then the performance of the multi-branch CNN will be better than the single-branch CNN. That is, with the same complexity per branch (i.e., the same complexity at the decoder side), the performance can be increased by using a multi-branch CNN. Another advantage is that, considering a bounded decoder complexity which is quite low, the multi-branch CNN can be correctly trained and converge, whereas a single-branch CNN may not converge because the number of weights is too low.

Each basic CNN i can use an error function (730, 735) based on the difference between the original image $S$ and the filtered output $\tilde{S}_i$. For the training, the input image may be divided into regions, for example, into CUs, CTUs, or slices, and the error function or loss function can be calculated for the regions.

Note that one of the branches can correspond to the identity function, whose output is the same as the input and no restoration is performed. This branch may be chosen by the encoder when no branch is able to perform a satisfactory restoration.

During the training process, a selector (740) may select, for each sample, the best branch. In order to keep a smooth, differentiable loss function (739) during the training part, the loss function is composed of the weighted sum (750, 755, 759) of all errors on each branch, where the best branch has a larger weighting factor and the other ones a smaller weight. This weighting applies especially during the back-propagation process where the loss function needs to be differentiable. After selection, a weighting factor ($\alpha_i$) for each branch is deduced.

During training, we observe that each branch specializes in a specific restoration problem, reducing the number of needed weights in the network ($W_i$) per branch. The branch specialization is controlled through the weighting factor ($\alpha_i$) applied to each branch that changes during the training. Each branch is more strongly updated (specialized) when it is suitable for a given sample, but other branches are also slightly updated to avoid overfitting. The backward and forward propagation passes can be asymmetric as the loss function does not need to be differentiable during the forward pass and that we want a loss function more accurately estimating the network performances. In this case, the weighting factors during the forward pass are set to select branches exclusively (weights are 0 or 1), and non-exclusively during the backward pass.

In the following, we describe an exemplary training process based on gradient descent, for a multi-branch network that contains three CNN branches and one identity branch. Mean Square Error (MSE) is used in the loss function. Each trained branch would oversee a certain subset of the training dataset, and all branches combined would cover the whole dataset.

To train the multi-branch CNN, at first, the gradient would flow on three CNN branches (the identity branch can't have gradient), until the three branches have a PSNR significantly higher than the PSNR of the identity branch, for example, when half of what is achieved by a DBF+SAO filters, or 80% of the training set performs better than the identity branch. This is to ensure that the three basic CNNs get some updates. If this step was not performed, since at the start, the identity branch has the best MSE for all samples, little to no gradient would go to other branches resulting in the network not trained at all.

Then the branch that has the best MSE get the gradient unchanged, and all the other branches get the gradient multiplied by a weighting factor $\alpha$ lower than 1. This is to help the gradient to propagate in each branch (i.e., not having $\alpha$ =0) to prevent a branch from overfitting by taking only very few samples of the training set.

In addition, this can prevent the network from not updating a branch that does not perform well. One could suppose that two branches would fit the dataset very well, with no sample left for the third branch. With the weighting factor $\alpha$, the third branch would update itself, very slowly, on the whole dataset until there are samples where this branch gets the best results. We can see from our experiments that with a value of $\alpha = 0.05$, the three branches all take care of a significant part of the dataset. The identity branch gets a very small part of the dataset (around 2-3%), which we can assume are the outliers.

For example, for a single-branch CNN with about 33000 parameters, after training, we obtain a BD-rate (Bjøntegaard delta rate) reduction of 4.41%. With the same CNN structure and parameters for a multi-branch version, the BD-rate reduction is 4.54%. With a single-branch CNN, we reach a maximum performance using the same condition with about 98000 parameters and a BD-rate reduction of 4.85%. With a multi-branch CNN, the maximum was reached with about 90000 parameters and a maximum of 4.91% BD-rate reduction. More interestingly, because of the branch specialization, we were able to reduce the number of weights to about 6000 parameters per branch (also decreasing the performances to 3.55% of BD-rate) to a point where the single-branch CNN was not trainable.

FIG. 7B illustrates an exemplary encoding process 700B using the multi-branch CNN, which corresponds to the trained CNN of FIG. 7A, according to an embodiment. Here we consider that the basic CNN branch is selected at the Coding Unit (CU) level. During encoding, the samples of a particular CU are categorized in a branch. The best branch (761, 762), for example, according to a rate-distortion (RD) metric (760, 765), is selected (770) and the branch index i is encoded (725) in the bitstream per CU. It should be noted that the selector (770) in the encoder may not be the same as the selector (740) used during training. During training, we select the best branch based only on the MSE, while during encoding, we may use a RD cost (e.g., MSE + coding cost of the index).

The restoration of the best branch is then selected by the encoder for this particular CU as the output from the $i^{th}$ basic CNN ($\tilde{S}_i$). The restored result may be saved in the RPB to be used as predictor for subsequent frames, or other blocks if applied in the block coding loop. In our experiment, we observe that one branch is dominant, namely, is chosen more often than other branches, probably because this branch specializes in common artifacts.

Alternatively, the branch can be selected and signaled at a different level, for example, at a Coding Block (CB) level (i.e., per component), at a Coding Tree Unit (CTU) level, at a slice level, or at a frame level. In another embodiment, both the encoder or decoder may decide which branch to use without explicit signaling, based on neighboring causal samples. For example, a CNN can be used to decide which branch to use.

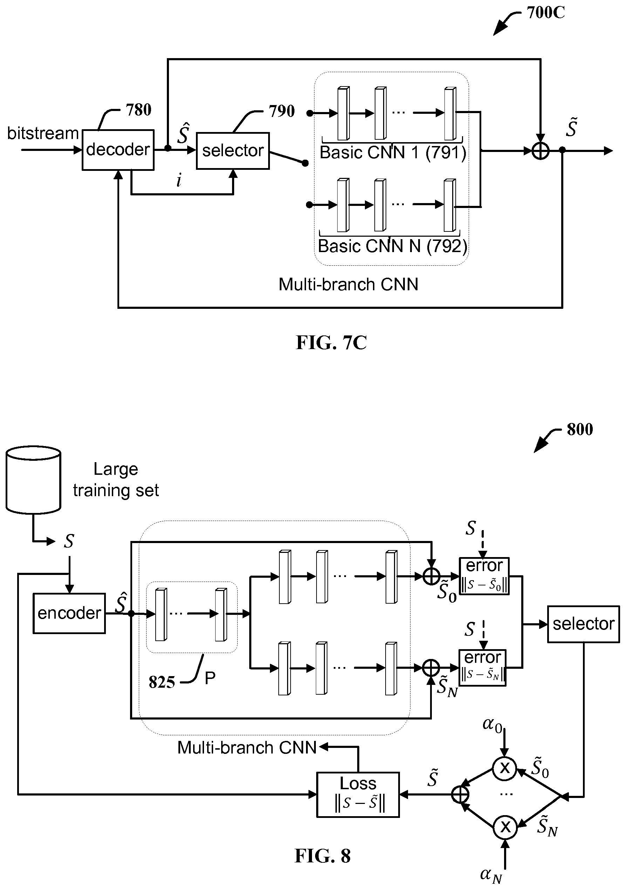

FIG. 7C illustrates an exemplary decoding process 700C using the multi-branch CNN, which corresponds to the trained CNN of FIG. 7A, according to an embodiment. During decoding, the branch number is decoded (780) for a given CU (or CB, CTU, slice or frame) and only this branch (791, 792) is selected (790) to perform the restoration, based on the decoded image without filtering. The restored result may be saved in the RPB to be used as predictor for subsequent frames or other blocks.

In FIGs. 7A, 7B and 7C, the training process, and the corresponding encoding and decoding processes are illustrated using an exemplary multi-branch CNN. Such an exemplary multi-branch CNN has a training time proportional to the number of branches, making it expensive to train with a large number of branches, for example, with 16 or 32 branches. To reduce the training time, we may make only some layers to be different from one branch to another.

FIG. 8 illustrates another training process 800 using another exemplary multi-branch CNN, according to an embodiment. In this example, the multi-branch CNN contains at the beginning a common part (part P, 825) where the branches share the same layers. The common layers that are shared by all branches can also be at the end of the network (in part P).

For VRCNN as shown in FIG. 5, the second and third layers each use two filters, namely, conv2 and conv3 for the second layer, and conv4 and conv5 for the third layer. It should be noted such two filters used in one layer is different from the concept of the basic CNN or branch as described above. In the multi-branch CNN, each basic CNN alone is capable of independently performing filtering of the initial reconstruction and outputting the restored image, and at the decoder side, only one branch (or a subset of branches) is implemented. However, both filters (conv2 and conv3, or conv4 and conv5) are part of the VRCNN and a single one of these filters can only perform an intermediate step of the entire in-loop filtering process. That is, these filters need to be used together, often in combination with other filters, to perform the in-loop filtering. Consequently, at the decoder side, conv2 and conv3, or conv4 and conv5 are not exclusive of each other and need to be performed for each sample, and thus, they do not reduce the decoder complexity as our proposed method.

In the above, the filtering is described with respect to the initial reconstructed version to obtain the restored image. When the filtering is performed at a block level (i.e., CB, CU or CTU) or at a slice level, it should be understood that the filtering is performed on the block or slice to obtain the restored block or slice. Also, while the description is mainly with respect to the luma component, the present embodiments can be applied to the chroma components.

The multi-branch CNN as described above contains N branches, each with M' layers, may have similar artifact reduction performance as a single-branch CNN with M>M' layers. However, by breaking the single-branch CNN into N branches, the decoder complexity can be reduced without decreasing the network performance. For example, when there are four basic CNNs, in order to get similar performance, each branch may use 0.75 * M weights, and the decoder complexity is about 0.75 of a corresponding single-branch CNN. Shorter basic CNNs also make the training process easier to converge. In addition, the multi-branch CNN is flexible and scalable as the number of branches can be decided, up to some limit, depending on the maximum acceptable decoder complexity.

In the above, we describe the multi-branch CNN for in-loop filtering. The present embodiments can also be applied to post-processing outside the coding loop to enhance image quality before rendering, or in other modules where filtering can be applied.

In the above, we use VRCNN as the basic CNN for the branch. In general, the basic CNNs in the multi-branch CNN can have the same structure. In other embodiments, different basic CNNs may have different numbers of layers, or even different structure. Here the structure of the CNN may be defined based on the number of layers, connections, and the type of layers. In some embodiment, some branches may be non-convolutional neural networks. In the above, the MSE is used for calculating the loss function in the exemplary embodiments. However, other error functions, such as a perceptual, differentiable metric, for example, the MS-SSIM can be used for the loss function.

In the above, we assume all in-loop filters, such as in-loop filters (165, 265) in an HEVC video encoder or decoder, are replaced by the multi-branch CNN. In other embodiment, the multi-branch CNN can be used together with other in-loop filters, in parallel or successively. In addition, because the multi-branch approach uses the information from the block itself when it is applied at a block level, the multi-branch network can be used in the RDO decision, similar to how the bilateral filter is tested in the RDO decision.

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the number of layers or the number of branches. It should be noted that the specific values are for exemplary purposes and the present embodiments are not limited to these specific values.

In the above, various embodiments are described with respect to JVET and the HEVC standard. However, the present embodiments are not limited to JVET or HEVC, and can be applied to other standards, recommendations, and extensions thereof. Various embodiments described above can be used individually or in combination.

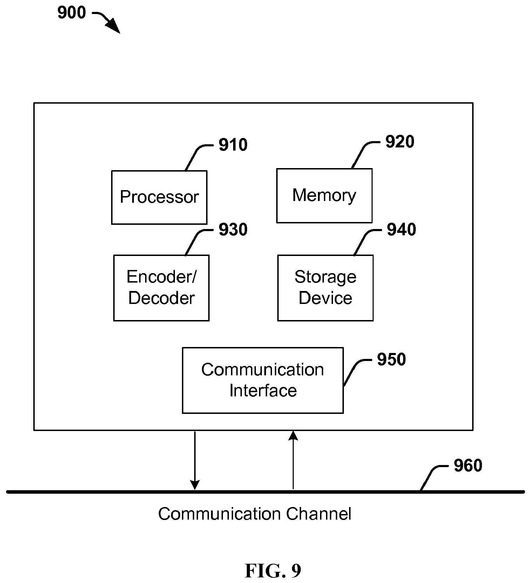

FIG. 9 illustrates a block diagram of an exemplary system in which various aspects of the exemplary embodiments may be implemented. System 900 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 900 may be communicatively coupled to other similar systems, and to a display via a communication channel as shown in FIG. 9 and as known by those skilled in the art to implement the exemplary video system described above.

The system 900 may include at least one processor 910 configured to execute instructions loaded therein for implementing the various processes as discussed above. Processor 910 may include embedded memory, input output interface and various other circuitries as known in the art. The system 900 may also include at least one memory 920 (e.g., a volatile memory device, a non-volatile memory device). System 900 may additionally include a storage device 920, which may include non-volatile memory, including, but not limited to, EEPROM, ROM, PROM, RAM, DRAM, SRAM, flash, magnetic disk drive, and/or optical disk drive. The storage device 940 may comprise an internal storage device, an attached storage device and/or a network accessible storage device, as non-limiting examples. System 900 may also include an encoder/decoder module 930 configured to process data to provide an encoded video or decoded video.

Encoder/decoder module 930 represents the module(s) that may be included in a device to perform the encoding and/or decoding functions. As is known, a device may include one or both of the encoding and decoding modules. Additionally, encoder/decoder module 930 may be implemented as a separate element of system 900 or may be incorporated within processors 910 as a combination of hardware and software as known to those skilled in the art.

Program code to be loaded onto processors 910 to perform the various processes described hereinabove may be stored in storage device 940 and subsequently loaded onto memory 920 for execution by processors 910. In accordance with the exemplary embodiments, one or more of the processor(s) 910, memory 920, storage device 940 and encoder/decoder module 930 may store one or more of the various items during the performance of the processes discussed herein above, including, but not limited to the input video, the decoded video, the bitstream, equations, formula, matrices, variables, operations, and operational logic.

The system 900 may also include communication interface 950 that enables communication with other devices via communication channel 960. The communication interface 950 may include, but is not limited to a transceiver configured to transmit and receive data from communication channel 960. The communication interface may include, but is not limited to, a modem or network card and the communication channel may be implemented within a wired and/or wireless medium. The various components of system 900 may be connected or communicatively coupled together using various suitable connections, including, but not limited to internal buses, wires, and printed circuit boards.

The exemplary embodiments may be carried out by computer software implemented by the processor 910 or by hardware, or by a combination of hardware and software. As a non-limiting example, the exemplary embodiments may be implemented by one or more integrated circuits. The memory 920 may be of any type appropriate to the technical environment and may be implemented using any appropriate data storage technology, such as optical memory devices, magnetic memory devices, semiconductor-based memory devices, fixed memory and removable memory, as non-limiting examples. The processor 910 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1.  A method for video encoding, comprising:

    determining (725) a first reconstructed version of an image block; and
    processing (761, 762) said first reconstructed version of said image block, in accordance with a branch from a plurality of branches, to form a second reconstructed version of said image block, wherein one or more of said plurality of branches are based on respective neural networks.

2.  A method for video decoding, comprising:

    determining (780) a first reconstructed version of an image block;
    accessing (790) information indicating that a branch, from a plurality of branches, is to be used for processing said first reconstructed version of said image block, wherein two or more of said plurality of branches are based on respective neural networks; and
    processing (791, 792), in accordance with said indicated branch, said first reconstructed version of said image block to form a second reconstructed version of said image block.

3.  An apparatus (900) for video encoding, comprising at least a memory and one or more processors, said one or more processors configured to:

    determine a first reconstructed version of an image block; and
    process said first reconstructed version of said image block, in accordance with a branch from a plurality of branches, to form a second reconstructed version of said image block, wherein one or more of said plurality of branches are based on respective neural networks.

4. An apparatus (900) for video decoding, comprising at least a memory and one or more processors, said one or more processors configured to:

   determine a first reconstructed version of an image block;
   access information indicating that a branch, from a plurality of branches, is to be used for processing said first reconstructed version of said image block, wherein one or more of said plurality of branches are based on respective neural networks; and
   process, in accordance with said indicated branch, said first reconstructed version of said image block to form a second reconstructed version of said image block.

5. The method of claim 1 or 2, or the apparatus of claim 3 or 4, wherein the neural networks are convolutional neural networks.

6. The method of any one of claims 1, 2 and 5, or the apparatus of any one of claims 3-5, wherein each of said neural networks is capable of independently filtering said first reconstructed version of said image block.

7. The method of any one of claims 1, 2, 5 and 6, or the apparatus of any one of claims 3-6, wherein said plurality of branches include an identify branch.

8. The method of any one of claims 1, 2 and 5-7, or the apparatus of any one of claims 3-7, wherein said image block corresponds to a Coding Unit (CU), Coding Block (CB), or a Coding Tree Unit (CTU).

9. The method of any one of claims 1, 2 and 5-8, or the apparatus of any one of claims 3-8, wherein said neural networks share one or more layers.

10. The method of claim 9, or the apparatus of claim 9, wherein said shared one or more layers are at the beginning or at the end of said neural networks.

11. The method of any one of claims 1, 2 and 5-10, or the apparatus of any one of claims 3-10, wherein a training process for said neural networks is based on a loss function, which is based on a weighted sum of differences between training samples and outputs from said respective neural networks.

12. The method of any one of claims 1, 2 and 5-11, further comprising, or the apparatus of any one of claims 3-11, wherein said one or more processors are further configured to operate:

    performing gradient descent until one branch has a smaller error than other non-identity branches; and
    scaling gradients of said other non-identity branches by a weighting factor smaller than 1.

13. The method of any one of claims 1, 2 and 5-12, or the apparatus of any one of claims 3-12, wherein said neural networks have a same structure.

14. A video signal, formatted to include:

    prediction residuals between an image block and a predicted block of said image block,
    wherein a branch, from a plurality of branches, is used for processing a reconstructed version of said image block,
    wherein one or more of said plurality of branches are based on respective neural networks, and
    wherein said reconstructed version of an image block is based on said predicted block and said prediction residuals.

15. A computer program comprising software code instructions for performing the method according to any one of claims 1, 2 and 5-13, when the computer program is executed by one or more processors.

100

**110**
+ −

**125** Transform

**130** Quantization

**145** Entropy Coding

**140** Inverse Quantization

**150** Inverse Transform

**155**

**105**

**160** Intra prediction

**170** Motion Compensation

**165** In-loop Filters

**175** Motion Estimation

**180** Reference Picture Buffer

## FIG. 1

200

**230** Entropy Decoding

**240** Inverse Quantization

**250** Inverse Transform

**255**

**270**

**260** Intra Prediction

**275** Motion Compensation

**265** In-loop Filters

**280** Reference Picture Buffer

## FIG. 2

**FIG. 3**

**FIG. 4**

**FIG. 5**

**FIG. 6A**

**FIG. 6B**

**FIG. 6C**

**FIG. 7A**

**FIG. 7B**

**FIG. 7C**

**FIG. 8**

900

910
Processor

920
Memory

930
Encoder/
Decoder

940
Storage
Device

950
Communication
Interface

960

Communication Channel

**FIG. 9**

Europäisches
Patentamt

European
Patent Office

Office européen
des brevets

**EUROPEAN SEARCH REPORT**

Application Number

EP 17 30 6102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/036370 A1 (MEDIATEK INC [CN]) 9 March 2017 (2017-03-09) * abstract; figure 4 * * paragraphs [0003], [0004], [0032] * ----- | 1-15 | INV. G06T9/00 H04N19/82 |
| X | US 2009/034622 A1 (HUCHET GREGORY [FR] ET AL) 5 February 2009 (2009-02-05) * abstract; figure 1 * * paragraphs [0033], [0058] * ----- | 1-15 | |
| X | HUCHET J-Y CHOUINARD LAVAL UNIV (CANADA) G ET AL: "Decision trees for denoising in H.264/AVC video sequences", VISUAL COMMUNICATIONS AND IMAGE PROCESSING; 29-1-2008 - 31-1-2008; SAN JOSE,, 29 January 2008 (2008-01-29), XP030081214, * abstract * * paragraph [01.2] * ----- | 1-15 | |
| A | GUO JUN ET AL: "One-To-Many Network for Visually Pleasing Compression Artifacts Reduction", IEEE COMPUTER SOCIETY CONFERENCE ON COMPUTER VISION AND PATTERN RECOGNITION. PROCEEDINGS, IEEE COMPUTER SOCIETY, US, 21 July 2017 (2017-07-21), pages 4867-4876, XP033249843, ISSN: 1063-6919, DOI: 10.1109/CVPR.2017.517 [retrieved on 2017-11-06] * figure 3 * ----- | 1-15 | TECHNICAL FIELDS SEARCHED (IPC) G06T H04N |

The present search report has been drawn up for all claims

| Place of search | Date of completion of the search | Examiner |
|---|---|---|
| Munich | 31 January 2018 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 451 293 A1**

## ANNEX TO THE EUROPEAN SEARCH REPORT
## ON EUROPEAN PATENT APPLICATION NO.

EP 17 30 6102

| Patent document cited in search report | | Publication date | Patent family member(s) | | Publication date |
|---|---|---|---|---|---|
| WO 2017036370 | A1 | 09-03-2017 | NONE | | |
| US 2009034622 | A1 | 05-02-2009 | CA | 2638465 A1 | 01-02-2009 |
| | | | US | 2009034622 A1 | 05-02-2009 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A convolutional neural network approach for post-processing in HEVC intra coding. **YUANYING DAI et al.** International Conference on Multimedia Modeling. Springer, 2017, 28-39